Europäisches Patentamt

European Patent Office

Office européen des brevets

(11) Publication number: **0 127 562**
**B1**

(12) **EUROPEAN PATENT SPECIFICATION**

(45) Date of publication of patent specification: **08.08.90**

(21) Application number: **84630070.5**

(22) Date of filing: **27.04.84**

(51) Int. Cl.⁵: **F 02 C 7/06, F 01 D 25/12,**
**F 01 D 25/16, F 04 D 29/12**

(54) Bearing compartment protection system.

(30) Priority: **31.05.83 US 499633**

(43) Date of publication of application:
**05.12.84 Bulletin 84/49**

(45) Publication of the grant of the patent:
**08.08.90 Bulletin 90/32**

(84) Designated Contracting States:
**DE FR GB**

(56) References cited:
**CH-A- 266 730**
**FR-A-1 484 834**
**FR-A-2 205 627**
**US-A-2 749 087**
**US-A-2 791 090**
**US-A-2 992 842**
**US-A-3 768 921**
**US-A-4 156 342**
**US-A-4 337 983**
**US-A-4 369 016**
**US-A-4 385 788**

(73) Proprietor: **UNITED TECHNOLOGIES**
**CORPORATION**
**United Technologies Building 1, Financial Plaza**
**Hartford, CT 06101 (US)**

(72) Inventor: **Stevens, Leonard W.**
**16 Irene Drive**
**Vernon Connecticut 06066 (US)**
Inventor: **Siwik, Williams S.**
**25 Ralph Road**
**Manchester Connecticut 06040 (US)**
Inventor: **Moore, William A.**
**Creamery Road**
**Durham Connecticut 06422 (US)**
Inventor: **Brown, Wayne M.**
**20 Loveland Road**
**North Granby Connecticut 06060 (US)**
Inventor: **Barnard, Andrew A.**
**100 Candlelight Drive**
**Glastonbury Connecticut 06033 (US)**

(74) Representative: **Weydert, Robert et al**
**OFFICE DENNEMEYER S.à.r.l. P.O. Box 1502**
**L-1015 Luxembourg (LU)**

Courier Press, Leamington Spa, England.

## Description

This invention relates to gas turbine power plants for powering aircraft and particularly to means and a method for buffering the bearings mounted in proximity to the hot section of the power plant.

In recent years, the industry has been undertaking an intensive effort in designing, developing and manufacturing power plants that exhibited a high thrust specific fuel consumption (TSFC). To this end it is desirous to operate the engine during at least a portion of its operating envelope at a temperature higher than has heretofore been achieved. One of the consequences of these "hotter" engines is that the mid-frame bearings supporting the rotating machinery is disposed in a hotter and higher pressure environment than has heretofore been encountered.

Coincidental with disposing the bearings in a hotter environment, outside bearing compartment pressures have risen attendantly. The consequences of these conditions, namely hotter and higher pressure environment and pressurized bearing compartment could result in an undesirable condition with the bearing compartment, which may manifest in fires and degradation of the components.

While the industry has provided buffer means for bearings in heretofore known engines, such systems flow air at a lower temperature and much lower pressure and/or cooler air at the same pressure into the cavity surrounding the bearing or in close proximity thereto. For such heretofore known systems to work satisfactorily it is necessary to continously flow the air to lower pressure areas of the engine in order to generate sufficiently lower pressure at the seal adjacent the bearing compartment. In some installations it was also necessary to vent the excess flow overboard. Whether that air is being vented overboard or routed to a lower pressure area, by bypassing the high pressure turbine, the use of the air in this manner results in an overall loss in engine performance. To obtain the proper pressure in these heretofore designs it is necessary to create a pressure drop by the use of seals and in practice these seals are typically of the labyrinth design. Obviously, the constant wear of these seals adversely affects the pressure drop value and hence flow.

A gas turbine engine and method of protecting a bearing compartment according to the precharacterizing portions of independent claims 1 and 7 is disclosed in FR—A—1,484,834. The extracted and cooled air is circulated through the buffer cavities and discharged overboard, thus adversely affecting engine performance. Before reaching the buffer cavities a portion of the air is tapped off to cool the turbine shafts and to pressurize a seal disposed between the turbine rotors.

Thus, these heretofore known systems incur disadvantages requiring a substantial amount of air to buffer the external surfaces of the bearing compartment and discharging the buffer air to lower engine pressures or overboard and requiring pressure reducing seals.

The object of the invention is to provide for a gas turbine engine, means and a method for buffering the bearing compartment so as to insulate this compartment from the hotter environment in close proximity thereto without adversely affecting engine performance.

This is achieved, in accordance with the invention, by the features of the characterizing portions of independent claims 1 and 7.

This invention serves to solve the particular problem enumerated above by providing a high pressure, cooler air buffer zone for a bearing that is encapsulated adjacent to the combustion section. We have found that we can obtain a satisfactory environment that minimizes the likelihood of inadvertent fires in the area of the bearings by applying adjacent to the seals of the bearing compartment high pressure compressor air that has been cooled to some temperature below the flash point of the oil/air mixture associated with the bearing cooling and lubrication system. The pressure of the buffer air is slightly higher than the hotter ambient air so that the hotter air will not migrate to the bearing compartment in the event of the seal malfunctioning. It is contemplated that the cooled compressor bleed air is fed to a buffer zone formed adjacent to the carbon seals of the bearing compartment. The buffer zone maybe defined by an elongated annular space defined between the rotating shaft and a stationary annular, radially spaced, parallelly disposed extension member. This member being open ended so that flow admitted to said buffer zone intermediate the ends thereof flows axially in either direction with a preference of flowing toward the radial seal disposed on one of said ends.

In one of the preferred embodiments the buffer one is fed by at least one pipe (preferably two) for each of the buffer zones associated with the pair of carbon seals. In another embodiment the bearing compartment is shrouded defining an annular passage feeding the buffer zone, which passage cools the entire bearing compartment surface. The second outer shroud forms a heat shield by surrounding the annular passage and is dead-ended to provide an insulation of dead air.

It is contemplated by this invention that the air bled from the compressor to buffer the bearing compartment is utilized downstream of the engine in a manner that will not adversely penalize the engine's performance.

Notwithstanding the fact that the compressor air routed to the bearing compartment has been heated to some degree in its contact with the combustor environment, the air still is sufficiently cool to be useful in cooling the hot high turbine rotor. And since the pressure of this air is sufficiently high to be compatible with the pressure in the high turbine envionment, it is routed there to scrub this hot section. In engines that employ tangential on board injectors (TOBI) for cooling the high turbine rotor, the advantages of utilizing this invention results in utilizing less TOBI air than would otherwise be necessary. It is possible, because of the relative low temperature of the air from the buffer to the TOBI air, a significant savings in the use of the overall cooling air for the high pressure turbine may be realised. For a complete description of a TOBI reference should be made to US—A—3,768 921.

The open ended buffer zones adjacent the bearing compartment seals admit both buffer air and environment air into the compartment in the event of a seal malfunction which air does not adversely affect the bearing and its components. Temperature buffering is achieved without the use of labyrinth seals and the adverse conditions associated with the use of such seals.

The higher pressure buffer air overflows relative to the needs of the compartment carbon seals, precluding the hot surrounding air from entering the carbon seal leakage. Since the knife edge labyrinth seals are no longer necessary, whose clearançe increases upon engine operation, the buffering system becomes insensitvie to seal rubs and therefore effectuates a greater degree of safety against fires which would otherwise occur due to normal engine operation deterioration.

The high pressure, cooler buffer air is used to cool the pressure turbine resulting in an effective use of compressor air utilized for cooling purposes without incurring an engine operating penalty.

Other features and advantages will be apparent from the specification and claims and from the accompanying drawings which illustrate an embodiment of the buffering system. In the drawings:

Fig. 1 is a schematic and perspective of a gas turbine engine with the heat exchanger utilized to cool the compressor air prior to being returned as the buffer air, and

Fig. 2 is a fragmentary view partly in section and partly in schematic showing a first embodiment of the buffering system.

Fig. 3 is a fragmentary view partly in section and partly in schematic showing another embodiment of the buffering system.

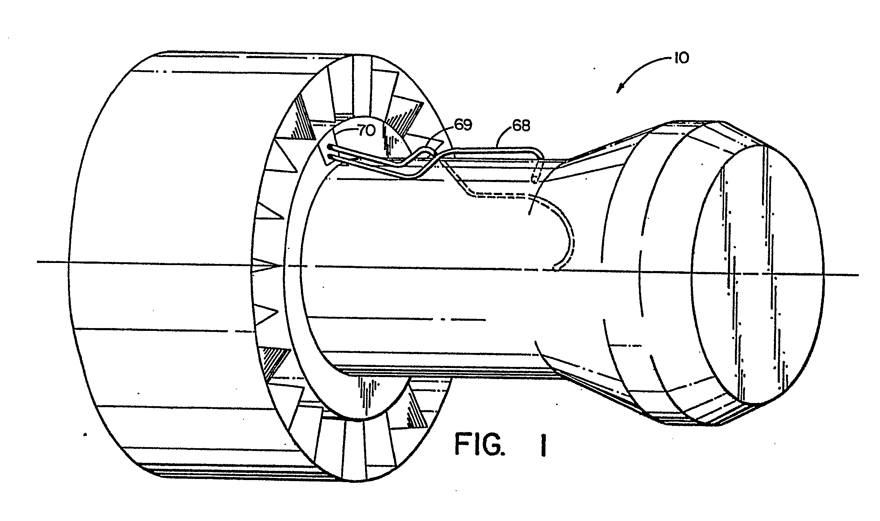

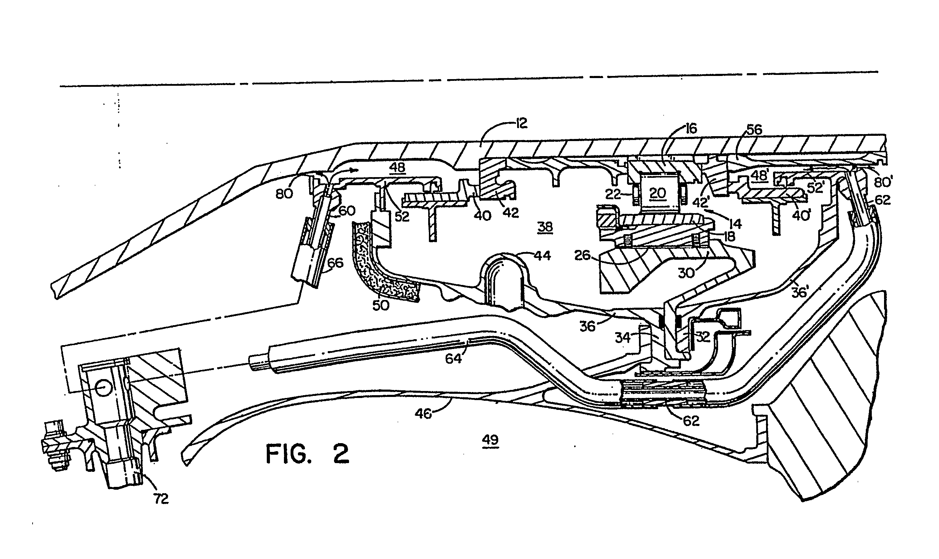

The inventon can best be understood by referring to Figs. 1 and 2, showing a typical fan jet engine generally indicated by reference numeral 10, having a fan section, compressor section, combustor section, turbine section and exhaust section. For the sake of simplicity and convenience, the details of a suitable gas turbine engine is omitted herefrom but reference should be made to the JT-9D engine manufactured by Pratt & Whitney Aircraft of United Technologies Corporation, the assignee of this patent application.

Suffice it to say that the power plant comprises a twin spool having axial flow compressor and turbine stages, where each set of stages of the compressor and turbines are interconnected by a shaft. The burner section is disposed between the compressor and turbine sections for developing sufficient energy to power the turbine and develop thrust for propulsion. As noted in more detail in Fig. 2, the high pressure spool or gas generator (not shown) consists of shaft 12 suitably supported by roller bearings generally indicated by reference numeral 14. These bearings are well known and consists of an inner ring 16 mounted adjacent shaft 12, an outer ring 18, a plurality of rollers 20 and cage 22 and, in this instant, are surrounded by fluid damper 26. The damper and bearing are, in turn, supported and grounded to the annular support member 30 which is supported between flanges 32 and 34 of the bearing housing 36 and 36'. Bearing housing 36 and 36' encapsulates the bearing 14. For more details of a bearing and fluid damper construction reference should be made to US—A—4,337,983 and US—A—4,385,788.

As is apparent from the foregoing the bearing is encapsulated in the cavity of bearing compartment 38 defined by housing 36, 36' surrounding the shaft 12. The ends of the compartment 38 are sealed by suitable carbon seals 40 and 40' which are spring loaded (not shown) against the face of the seal plates 42 and 42' respectively. The construction of the carbon seals are well known and an example of a suitable construction is shown in US—A—2,992,842.

As is well known, the bearing compartment 38 is continously subjected to the flow of oil which serves to lubricate and cool the bearings which oil is retured through return line 44 mounted on the bottom of housing 36, 36'.

In this installation the bearing housing 36, 36' is supported to the diffuser case partially shown as reference numeral 46 which surrounds the burner liner (not shown) and defined therewith a cavity 49 that surrounds and shrouds the burner liner. Since the bearing compartment is radially disposed relative to the combustor and is exposed to the already heated compressor discharge air surrounding the bearing compartment, under certain operating conditions this location of the engine has the propensity of becoming extremely hot.

One method of insulating the bearing compartment 38 from this excess heat is by wrapping an insulating blanket 50 of suitable material (partially shown) around the housing 36, 36'.

In addition thereto or as an alternate to the insulation system a buffer zone is disposed at the inside diameter of the carbon seals. This buffer zone is suplied with a cool, high pressure air bled from the compressor. The temperature of this air is cooler and at a higher pressure than the ambient air surrounding the bearing compartment. While this system prevents hot air from entering the bearing compartment under normal operating conditions, in the event of an inadvertent leakage of the seal, the hotter ambient air is likewise prevented from entering into the bearing compartment, without first being fixed with buffer air. In the embodiment shown in Fig. 2, the cooler pressureized air is introduced at the inner diameter of the carbon seal in the annulus 48 and 48' defining buffer zones by pipes 60 and 62 to fill the spaces between the shaft 12, seal support structure 52 up to the seal plate 42 on the left hand side of the bearing 14 and between the sleeve 56, seal support 52' up to the seal plate 42', on the right hand side of bearing 14. While only a single feed line is shown on either side of the bearing, each side may carry more than one pipe, and two pipes spaced 180° apart are preferred in this embodiment.

Pipes 60 and 62 are concentrically mounted in outer tubes 66 and 64, respectively, which serve to insulate the inner pipe and maintain the air flowing to the buffer zone at a proper temperature level. The cooler pressurized air, as can be seen from Fig. 1, is bled from a suitable station in the compressor section, routed outside of the engine via line 68, through the fan heat exchanger 70 and returned internally via line 69 to the pipes 60 and 62 through manifold 72, (Fig. 2).

As noted from Fig. 2, the air feeding the buffer zone 48 and 48' which virtually is an annular chamber surrounding the shaft that feeds the leakage path across the carbon seals 40 and 40' is introduced at a point that is remote from the carbon seals. It will be appreciated that buffer zones 48 and 48' are both open ended chambers where buffer air can flow out through the carbon seal or through the gaps 80 and 80'. However because of the proper selection of the pressure of buffer air some portion of this air will always flow toward the carbon seal while the remaining portion of this air flows out of the buffer zone 48 and 48' through the gaps 80 and 80'. The amount of air required by a carbon seal in minimal relative to that supplied to the buffer zone during normal operation. The excess flow flows out gap 80. Under abnormal seal "stuck" or failure of the carbon seal, the total buffer flow and possibly some hot environmental air would leak into the compartment without major fire and possibly catastrophic failure consequences. The excess air under normal operation is used to supply air to the high pressure turbine blades. The blades are not over serviced because 1) air normally used say, through the TOBI, to service blades has been reduced and 2) further reduction of this TOBI air is possible because excess air from the buffer zone is cooler. By virtue of this invention a performance benefit is realized.

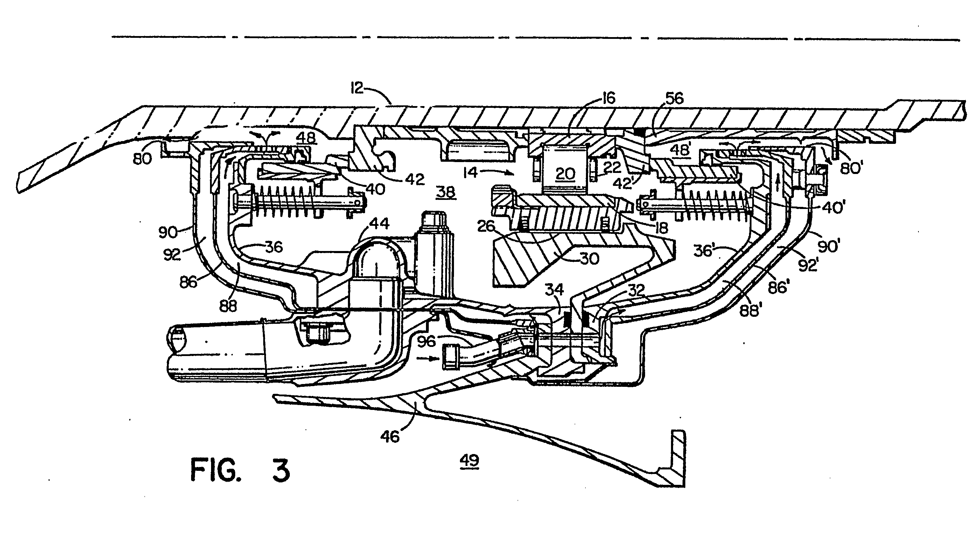

Fig. 3 exemplifies another embodiment of this invention and like-reference numerals refer to like parts. In this embodiment the encapsulated bearing compartment is enclosed on virtually both the left and right hand sides with sheet metal sheaths 86 and 86' spaced therefrom to define annular chambers 88 and 88'. A second left and right hand side sheath 90 and 90' encapsulate the entire unit and is spaced from the inner sheath 86 and 86' to define annular spaces 92 and 92'. The outer annular spaces 92 and 92' are dead ended and provide a dead air space that serve as an insulating blanket for the bearing compartment. This minimizes heat transfer from the hotter air surrounding the compartment to the oil in the bearing compartment.

As was the case of the system in Fig. 2, the system in Fig. 3 receives the higher pressure, cooler air from the heat exchanger and is fed into conduit 96 that serves as a manifold to feed the annular spaces 88 and 88' which in turn feeds the buffer zones 48 and 48'. Also, like the system in Fig. 2, the buffer zones are open-ended and do not require closely held labyrinth seals to contain the buffer air and prevent hot environmental air pollution in close proximity of the carbon seals.

By maintaining the pressure at the buffer zone at a higher value than the ambient air surrounding the encapsulated bearing compartment, leakage of the hotter environmental air into the bearing compartment is thwarted by the higher pressure cooler air in the buffer zone. This, obviously, negates the possibility of the oil in the heating compartment mixing with the hotter air, which could result in an adverse condition.

By utilizing some of the high pressure air, for example, the air at the discharge end of the compressor, and then cooling that air prior to being admitted into the buffer zone, the system can be satisfied with proper pressure and temperature air.

In addition to the advantage of using a small amount of bleed air which contrasts from heretofore buffer systems that continuously feed cooler air (not pressurized) and relies on the quantity flowing over the bearing for maintaining the cooling and buffering effort, this system affords other advantages, through not limited thereto.

It reduced the potential for bearing compartment fires by reducing the carbon seal leakage air temperature significantly.

It provides cold air at high pressures to buffer the compartment; the buffer air temperature is colder for a given pressure level than air directly drawn off the compressor system.

It increases the compartment environment pressure at which you can safely operate the bearing compartment.

In the event of a carbon seal failure, there is sufficient cold buffer air supplied to prevent a compartment oil fire.

Under normal operating conditions the excess buffer flow can be used to cool the high pressure turbine blades. This cooler air reduces the flow requirements needed from other sources as from the TOBI and augments the performance benefits.

**Claims**

1. A gas turbine engine having a compressor, and a turbine, a shaft (12) interconnecting said compressor and said turbine and bearing (14) supporting said shaft (12) and encapsulated in a housing (36) defining a bearing compartment (38) surrounding said shaft (12) and having sealing means (40, 40') surrounding said shaft (12) mounted at the ends of said compartment (38) in close proximity to said shaft (12), wall means defining buffer zones (48, 48') surrounding said shaft (12) adjacent said sealing means (40, 40'), means for extracting air from said compressor, fluid connecting means (60, 62, 68, 69, 72; 96, 86, 86') for leading said extracted air to a point external of said engine (10) and then into each of said buffer zones (48, 48') at a pressure higher than the pressure in an engine cavity surrounding said bearing compartment (38) and heat exchanger means (70) in said fluid connecting means (60, 62, 68, 69, 72; 96, 86, 86') intermediate said compressor and said buffer zones (48, 48') for cooling the extracted air prior to being admitted into said buffer zones (48, 48'), said buffer zones (48, 48') being formed as open-ended chambers allowing said extracted air to flow out of said buffer zones (48, 48'), characterized in that said bearing compartment housing (36) is located in an environment of hot engine air, that said sealing means (40, 40') are carbon contact sealing means (40, 40') normally allowing a minor portion of the extracted and cooled air to leak from the buffer zones (48, 48') through the carbon contact sealing means (40, 40') into said bearing compartment (38) with the remaining air being directed out of said open-ended chambers defining said buffer zones (48, 48') and into the turbine for cooling purposes, said remaining air, in the event of a falure of said carbon contact sealing means (40, 40'), being directed into said bearing compartment (38).

2. Gas turbine engine according to claim 1, characterized in that said fluid connecting means (60, 62, 68, 69, 72) includes at least one pipe (60, 62) internally of said engine (10) receiving extracted air from said heat exchanger (70) connecting each of said chambers (48, 48') at a point intermediate the ends thereof.

3. Gas turbine engine according to claim 2, characterized in that each of said pipes (60, 62) is concentrically mounted in an outer pipe (64, 66) radially spaced therefrom providing a dead air space for insulating the extracted air in each of said pipes (60, 62).

4. Gas turbine engine according to claim 1, characterized in that said fluid connecting means (96, 86, 86') includes a first sheath (86, 86') surrounding said bearing compartment housing (36) and spaced therefrom for defining an annular passageway (88, 88') for receiving extracted air, said air first scrubbing said bearing compartment housing (36) prior to being admitted into said open-ended chambers.

5. Gas turbine engine according to claim 4, characterized by including openings in said wall means defining the buffer zones (48, 48') interconnecting said annular passageway (88, 88') and said open-ended chambers at a point intermediate the ends thereof.

6. Gas turbine engine according to claim 4 or 5, characterized by including a second sheath (90, 90') surrounding the first sheath (86, 86') but spaced therefrom defining a dead-ended annular chamber (92, 92') for insulating the extracted air in said annular passageway (88, 88') from said hot engine air environment.

7. Method of protecting a gas turbine engine bearing compartment located in an environment of hot engine air, said gas turbine engine having a compressor and a turbine, a shaft (12) interconnecting the compressor and the turbine, a bearing (14) supporting said shaft (12) and encapsulated in a housing (36) defining said bearing compartment (38), sealing means (40, 40') mounted at the ends of the bearing compartment (38) in close proximity to said shaft (12), and buffer zones (48, 48') formed as open-ended chambers, surrounding said shaft (12) and adjacent said sealing means (40, 40'), said method comprising the steps of:

extracting air from said compressor at a pressure higher than the pressure in said environment,

cooling said extracted air externally of the engine,

directing said cooled air into said buffer zones (48, 48') and allowing it to follow out of said buffer zones (48, 48') characterized by:

normally allowing a minor portion of the air flow to leak through the seal means (40, 40') into said bearing compartment (38) and allowing the remainder of the air flow to flow into said environment,

normally directing the remainder of the air flow out of said open-ended chambers defining said buffer zones (48, 48') and into said turbine for cooling purposes, and

admitting substantially all of the air directed into said buffer zones (48, 48') into said bearing compartment (38) in the event of a failure of said seal means (40, 40').

**Patentansprüche**

1. Gasturbinentriebwerk mit einem Verdichter und einer Turbine, einer Welle (12), welche den Verdichter und die Turbine miteinander verbindet, einem Lager (14), welches die Welle (12) trägt und in eine Gehäuse (36) eingekapselt ist, das ein Lagerabteil (38) enthält, welches die Welle (12) umgibt, und Dichteinrichtungen (40, 40') hat, welche die Welle (12) umgeben und an den Enden des Abteils (38) in unmittelbarer Nähe der Welle (12) befestigt sind, einer Wandeinrichtung, welche Pufferzonen (48, 48') bildet, die Welle (12) bei den Dichteinrichtungen (40, 40') umgeben, einer Einrichtung zum Entnehmen von Luft aus dem Verdichter, einer Fluidverbindungseinrichtung (60, 62, 68, 69, 72; 96, 86, 86') zum Leiten der entnommenen Luft zu einem Punkt außerhalb des Triebwerks (10) und dan in jede der Pufferzonen (48, 48') mit einem Druck, der höher ist als der Druck in einem Triebwerkshohlraum, welcher das Lagerabteil (38) umgibt, und einer Wärmetauschereinrichtung (70) in der Fluidverbindugseinrichtung (60, 62, 68, 69, 72; 96, 86, 86') zwischen dem Verdichter und den Pufferzonen (48, 48') zum Kühlen der entnommenen Luft, bevor diese in die Pufferzonen (48, 48') eingeleitet wird, wobei die Pufferzonen (48, 48') als am Ende offene Kammern ausgebildet sind, welche der entnommenen Luft gestatten, aus den Pufferzonen (48, 48') hinauszuströmen, dadurch gekennzeichnet, daß da Lagerabteilgehäuse (36) in einer Umgebung heißer Triebwerksuft angeordnet ist, daß die Dichteinrichtungen (40, 40') Kohlekontaktdichteinrichtungen (40, 40') sind, welche einem geringen Teil der entnommenen und gekühlten Luft normalerweise gestatten, aus den Pufferzonen (48, 48') durch die Kohlekontaktdichteinrichtungen (40, 40') in das Lagerabteil (38) zu lecken, währen die übrige Luft aus den am Ende offenen Kammern, welche die Pufferzonen (48, 48') bilden, hinaus- und in die Turbine für Kühlzwecke eingeleitet wird, wobei die übrige Luft im Falle eines Versagens der Kohlekontaktdichteinrichtungen (40, 40') in das Lagerabteil (38) geleitet wird.

2. Gasturbinentriebwerk nach Anspruch 1, dadurch gekennzeichnet, daß die Fluidverbindungseinrichtung (60, 62, 68, 69, 72) wenigstens ein Rohr (60, 62) innerhalb des Triebwerks (10) aufweist, das die entnommene Luft aus dem Wärmetauscher (70) empfängt und an jede Kammer (48, 48') in einem Punkt zwischen den Enden derselben angeschlossen ist.

3. Gasturbinentriebwerk nach Anspruch 2, dadurch gekennzeichnet, daß jedes Rohr (60, 62) konzentrisch in einem äußeren Rohr (64, 66) mit radialem Abstand von diesem befestigt ist, so daß ein toter Luftraum zum Isolieren der entnommenen Luft in jedem Rohr (60, 62) vorhanden ist.

4. Gasturbinentriebwerk nach Anspruch 1, dadurch gekennzeichnet, die Fluidverbindungseinrichtung (96, 86, 86') eine erste Hülle (86, 86') aufweist, welche das Lagerabteilgehäuse (36) mit Abstand umgibt, um einen ringförmigen Durchlaß (88, 88') zum Aufnehmen der entnommenen Luft zu bilden, wobei die Luft zuerst das Lagerabteilgehäuse (36) überstreicht, bevor sie in die am Ende offenen Kammern eingelassen wird.

5. Gasturbinentriebwerk nach Anspruch 4, gekennzeichnet durch Öffnungen in der die Pufferzonen (48, 48') bildenden Wandeinrichtung, welche den ringförmigen Durchlaß (88, 88') und die am Ende offenen Kammern in einem Punkt zwischen den Enden derselben miteinander verbinden.

6. Gasturbinentriebwerk nach Anspruch 4 oder 5, gekennzeichnet durch das Vorhandensein einer zweiten Hülle (90, 90'), welche die erste Hülle (86, 86') umgibt, aber Abstand von derselben hat, eine ausgangslose Ringkammer (92, 92') zum Isolieren der entnommenen Luft in dem ringförmigen Durchlaß (88, 88') von der heißen Triebwerksluftumgebung zu bilden.

7. Verfahren zum Schützen eines Gasturbinentriebwerkslagerabteils, das in einer Umgebung heißer Triebwerksluft angeordnet ist, wobei das Gasturbinentriebwerk einen Verdichter und eine Turbine hat, eine Welle (12), welche den Verdichter und die Turbine miteinaner verbindet, ein Lager (14), das die Welle (12) trägt und in eine Gehäuse (36) eingekapselt ist, welches das Lagerabteil (38) bildet, Dichteinrichtungen (40, 40'), die an den Enden des Lagerabteils (38) in unmittelbarer Nähe der Welle (12) befestigt sind, und Pufferzonen (48, 48'), die als am Ende offene Kammern, welche die Welle (12) umgeben, und an den Dichteinrichtungen (40, 40') gebildet sind, wobei das Verfahren die Schritte beinhaltet:

Entnehmen von Luft aus dem Verdichter mit einem Druck, der höher als der Druck in der Umgebund ist,

Kühlen der Luft außerhalb des Triebwerks, Leiten der gekühlten Luft in die Pufferzonen (48, 48') und Gestatten, daß sie aus den Pufferzonen (48, 48') hinausströmt, gekennzeichnet durch:

normalerweise Gestatten, daß ein geringer Teil der Luftströmung durch die Dichteinrichtungen (40, 40') in das Lagerabteil (38) leckt, und Gestatten, daß die übrige Luftströmmung in die Umgebung strömt,

normalerweise Leiten der übrigen Luftströmung aus den am Ende offenen Kammern, welche die Pufferzonen (48, 48') bilden, hinaus und in die Turbine zu Kühlzwecken, und Einlassen von im wesentlichen sämtlicher Luft, die in die Pufferzonen (48, 48') geleitet worden ist, in das Lagerabteile (38) im Falle eines Versagens der Dichteinrichtungen (40, 40').

**Revendications**

1. Turbomoteur comprenant un compresseur et une turbine, un arbre (12) reliant le compresseur et la turbine, un palier (14) supportant l'arbre (12) et enfemé dans un carter (36) définissant un compartiment des palier (38) entourant l'arbre (12) et compartiment de palier (38) entourant l'arbre (12) et comportant des moyens d'étanchéité (40, 40'), entourant l'arbre (12), montés aux extrémités du compartiment (38), à proximité immédiate de l'arbre (12), des moyens à parois définissant des zones tampons (48, 48') entourant l'arbre (12), adjacents aux moyens d'étanchéité (40, 40'), des moyens pour extraire de l'air à partir du compressue, des moyens de connection pour un fluide (60, 62, 68, 69, 72; 96, 86, 86') pour conduite l'air extrait vers un point se trouvant à l'extérieur du moteur (10) et ensuite vers et dans chacune des zones tampons (48, 48'), à une pression plus élevée que la pression régnant dans une cavité du moteur entourant le compartiment du palier (38), et des moyens échangeurs de chaleur (70) disposés dans les moyens de connection pour un fluide (60, 62, 68, 69, 72; 96, 86, 86'), entre le compresseur et les zones tampons (48, 48'), afin de refroidir l'air extrait avant que celui-ce ne soit admis dans les zones tampons (48, 48'), ces zones tampons (48, 48') étant formées en tant que chambres à extrémitiés ouverts permettant à l'air extrait de s'écouler à l'extérieur des zones tampons (48, 48'), caractérisé en ce que le carter (36) du compartiment du palier est logé dans un environnement d'air très chaud du moteur, en ce que les moyens d'étanchéité (40, 40') sont des organes d'étanchéité à contact en carbone (40, 40') autorisant normalement une petite portion de l'air extrait et refroidi à fuir, à partir des zones tampons (48, 48'), à travers les organes d'étanchéité à contact en carbone (40, 40'), vers et dans le compartiment du palier (38), la portion restante de l'air étant dirigée vers l'extérieur des chambres à extrémités ouvertes définissant les zones tampons (48, 48'), et ves et dans la turbine à des fins de refroidissement, cette portion restante de l'air étant dirigée, dans le cas d'un défaut des organes d'étanchéité à contact en carbone (40, 40'), vers et dans le compartiment du palier (38).

2. Turbomoteur suivant la revendication 1 caractérisé en ce que les moyens de connection pour un fluide (60, 62, 68, 69, 72) comportent au moins un conduit (60, 62) se trouvant à l'intérieur du moteur (10), recevant de l'air extrait à partir de l'échangeur de chaleur (70) et raccordé à chacune des chambres (48, 48') en un point situé entre les extrémités de cette chambre.

3. Turbomoteur suivant la revendication 2 caractérisé en ce que chacun des conduits (60, 62) est monté concentriquement dans un tube externe (64, 66) espacé radialement du conduit en constituant un volume d'air 6mort pour isoler l'air extrait dans chacun des conduits (60, 62).

4. Turbomoteur suivant la revendication 1 caractérisé en ce que les moyens de connection pour un fluide (96, 86, 86') comportent une première gain (86, 86') entourant le carter (36) du compartiment du palier et espacée de clui-ci de manière à définir un passage annulaire (88, 88') pour recevoir l'air extrait, cet air léchant en premier lieu le carter (36) du compartiment du palier avant d'être admis dans les chambres ouvertes à leurs extrémités.

5. Turbomoteur suivant la revendication 4 caractérisé en ce que des ouvertures sont prévues dans les moyens à parois définissant les zones tampons (48, 48') pour faire comuniquer les passage annulaire (88, 88') et les chambres à extrémités ouvertes en un point situé entre les extrémités de ces chambres.

6. Turbomoteur suivant l'une quelconque des revendications 4 ou 5 caractérisé en ce que il comporte une seconde gaine (90, 90') entourant la première gaine (86, 86') en étant toutefois espacée de celle-ci, de manière à définir une chambre annulaire à extrémités fermées (92, 92'), pour isoler l'air extrait, se trouvant dans le passage annulaire (88, 88'), de l'air ambiant très chaud du moteur.

7. Procédé de protection d'un compartiment de palier d'un turbomoteur logé dans un environnement d'air du moteur très chaud, ce turbomoteur comportant un compresseur et une turbine, un arbre (12) reliant le compresseur et la turbine, un palier (14) supportant l'arbre (12) et enfermé dans un carter (36) définissant le compartiment de palier (38), des moyens d'étanchéité (40, 40') montés aux extrémités du compartiment de palier (38), à proximité immédiate de l'arbre (12), et des zones tampons (48, 48') formées en tant que chambres à extrémités ouvertes, entourant l'arbre (12) et adjacentes aux moyens d'étanchéité (40, 40'), ce procédé comprenant les étapes consistant à extraire de l'aire à partir du compresseur, à une pression supérieure à la pression d'air dans l'environnement, à refroidir l'air extrait à l'extérieur du moteur, à diriger l'air ainsi refroidi vers et dans les zones tampons (48, 48') et à l'autoriser à s'écouler à l'extérieur de ces zones tampon (48, 48'), characterisé en ce qu'on autorise normalement une petite partie du flux d'air à fuir, à travers les moyens d'étanchéité (40, 40'), vers et dans le compartiment du palier (38), et on autorise le reste du flux d'air à s'écouler vers et dans l'environnement, on dirige normalement le reste du flux d'air à l'extérieur des chambres à extrémitiés ouvertes définissant les zones tampons (48, 48'), vers et dans la turbine afin de la refroidir, et on admet sensiblement la totalité de l'air dirigé vers et dans les zones tampons (48, 48') dans le compartiment du palier (38) dans le cas d'une défaillance des moyens d'étanchéité (40, 40').

FIG. 1

FIG. 2

FIG. 3

EP 0 127 562 B1